# FASCICULE DE BREVET EUROPEEN

(11) **EP 0 518 726 B1**
(45) Date de publication et mention de la délivrance du brevet: **13.09.1995**
(21) Numéro de dépôt: 92401499.6
(22) Date de dépôt: 02.06.1992
(51) Int. Cl.: B60N 2/30

(54) **Dispositif d'une réhausse d'un coussin de siège de véhicule comprenant un verrouillage de sécurité**
Vorrichtung zum Erhöhen eines Fahrzeugsitzkissens, welche eine Sicherheitsverriegelung aufweist
Device for raising a vehicle seat cushion, having a safety interlock

(30) Priorité: 11.06.1991 FR 9107060
(43) Date de publication de la demande: 16.12.1992
(73) Titulaire: BERTRAND FAURE AUTOMOBILE "B.F.A.", F-91300 Massy (FR)
(72) Inventeur: Forget,Dominique, F-61440 Echalou (FR)
(74) Mandataire: Madeuf, René Louis

(56) Documents cités:
- EP-A- 0 286 542
- EP-A- 0 383 123
- DE-A- 2 807 064
- DE-A- 3 020 212
- DE-A- 3 715 312
- DE-A- 4 033 198

## Description

On connaît déjà sur les sièges ou banquettes arrière d'un véhicule des assises comprenant chacune deux coussins c'est-à-dire un coussin avant mobile en hauteur et un coussin arrière fixe prenant appui contre la partie inférieure du dossier du siège.

Le coussin mobile avant, qui est destiné à servir de siège pour enfant lorsqu'il est en position haute contre la surface médiane du dossier, permet de maintenir l'enfant à l'aide de la ceinture de sécurité équipant ce siège ou cette partie de banquette de siège.

De tels sièges en deux coussins l'un fixe l'autre mobile, sont destinés à permettre le transport d'un enfant ayant de 3 à 10 ans sans avoir besoin de fixer sur le siège ou la banquette un siège coquille spécial, lourd, encombrant et coûteux.

Ces assises mobiles verticalement, connues jusqu'à présent, présentent l'inconvénient que le mécanisme d'utilisation et d'abaissement nécessite des manoeuvres délicates et l'emploi de deux verrouillages dont la manoeuvre se fait séparément, d'où un travail important n'offrant pas une sécurité parfaite.

La présente invention remédie à ces inconvénients en créant un dispositif de réhausse du coussin mobile d'assise de siège d'automobile dont le mécanisme de verrouillage se fait automatiquement sans manoeuvres particulières, puisqu'il suffit de soulever le coussin avant de l'assise jusqu'au moment où ce coussin vient, par sa partie arrière, en butée contre la zone médiane du dossier du siège.

La remise en place normale de ce coussin avant se fait en manoeuvrant une poignée permettant le déverrouillage instantané du mécanisme et, de ce fait, sous l'action d'éléments élastiques, le retour en position normale du coussin avant mobile en reconstituant aussi l'assise du siège considéré.

On connaît par EP-A-0 286 542, qui a été utilisé pour énoncer la première partie de la revendication 1 annexée, un dispositif d'une réhausse d'un coussin de siège de véhicule comprenant un verrouillage de sécurité dans lequel il est prévu que l'assise du siège est constituée par deux coussins, un coussin avant mobile verticalement et un coussin arrière fixe restant solidaire du siège, et dans lequel il est prévu, sur les parties latérales de l'armature d'assise, des flasques supportant à la partie avant des axes sur lesquels sont articulés des leviers fixés à leur partie avant sur des axes solidaires d'une armature porte-coussin, cette armature porte-coussin présentant à sa partie arrière des axes coopérant avec des bielles articulées sur des axes montés dans des paliers solidaires de l'armature de l'assise du siège.

Une telle disposition ne donne pas entièrement satisfaction et l'invention est caractérisée en ce que des crochets, présentant à leur partie arrière des découpes, coopèrent par des axes avec des leviers de façon que, lorsque ces crochets sont tirés en arrière vers le dossier du siège, l'armature porte-coussin et le coussin, qui lui est solidaire, se trouvent mis en position haute jusqu'au moment où les découpes des crochets s'enclenchent sur les axes d'articulation des bielles, mouvement qui provoque, par butée d'un des crochets, la rotation d'un levier en S autour d'un axe vertical, l'extrémité arrière de ce levier déplaçant une fourchette dont la partie centrale évidée vient, en pénétrant sous un pion, se bloquer en verrouillant l'ensemble desdits leviers, bielles et crochets le décrochement des crochets s'effectuant par soulèvement de ceux-ci au moyen d'un axe transversal monté sur des bras solidaires des axes d'articulation des bielles et dont l'un est prolongé par une manette.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une vue schématique montrant le coussin avant en position d'utilisation haute avec l'enfant assis sur le coussin avant.

La fig. 2 est une élévation latérale du dispositif de réhausse de coussin avant d'un siège avec son verrouillage.

La fig. 3 est un plan correspondant à la fig. 2.

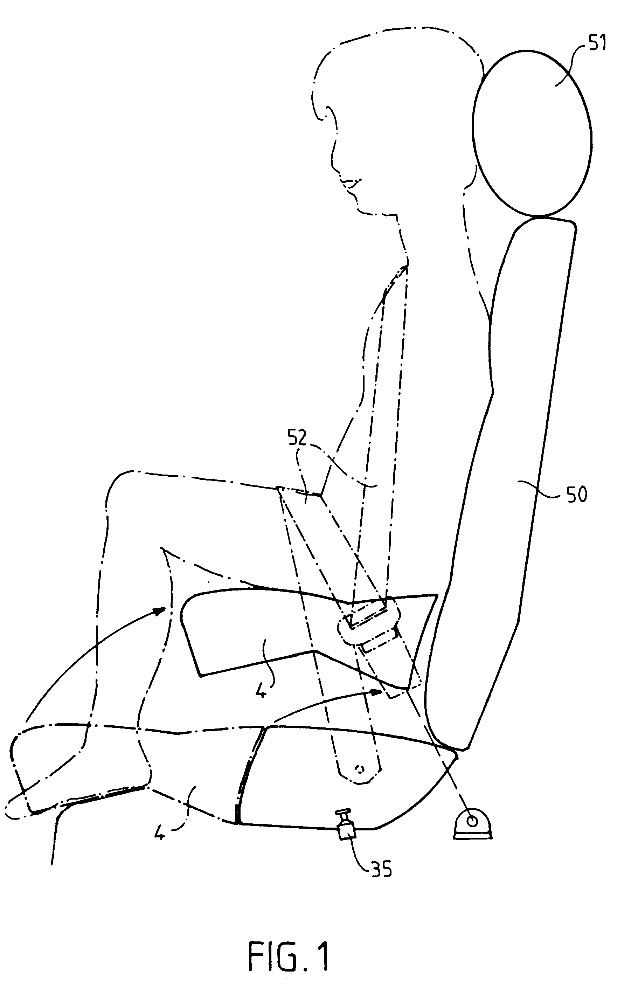

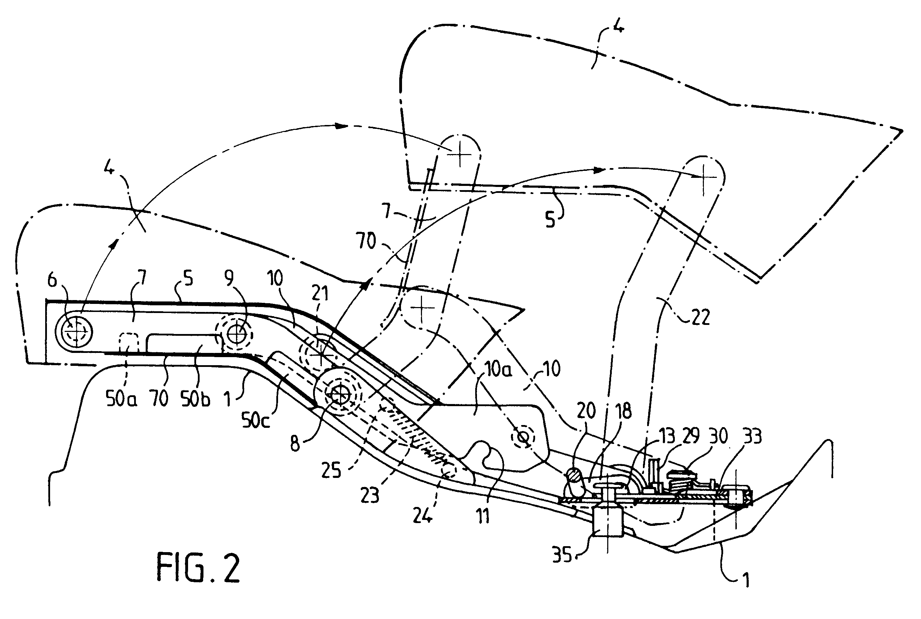

Aux figs. 1 et 2 on a représenté le soubassement 1 du siège considéré qui peut être la moitié d'une banquette arrière d'un véhicule.

Le soubassement 1 comporte, sur ses deux côtés, des flasques redressés verticalement 2 et 2a attenant à l'armature 17 permettant la mise en place des axes pivot 8 et 13 des biellettes 7 et 22.

Une tôle 50 de protection des jambes de l'enfant en la position haute et du maintien latéral des biellettes 7 est rendue solidaire par des pattes 50a, 50b, 50c par un moyen connu sur les biellettes 7.

De plus, le coussin avant 4 schématisé en traits mixtes repose à sa partie inférieure sur une armature porte-coussin 5.

Cette armature porte-coussin 5 maintient à sa partie inférieure avant deux axes 6 servant de point d'articulation à des leviers 7 articulés à leur partie arrière sur des axes 8 solidaires des flasques 2.

Les leviers 7 sont reliés chacun par des axes 9 fixés entre les axes 6 et 8 sur des crochets 10 dont les extrémités arrières 10a sont élargies et présentent chacune une découpe 11 destinée à venir s'enclencher sur des axes 13 solidaires du palier 14 supporté par la partie arrière redressée 2a verticalement de l'armature 17 de l'assise du siège.

Les axes 13 sont solidaires des bras 18 portant un axe transversal 20. L'un des axes 13 est prolongé en 13a par une manette dont le rôle sera expliqué plus loin.

Finalement, l'armature porte-coussin 5 présente à sa partie arrière 5a des axes 21 maintenant l'extrémité avant de bielles 22 articulées sur les axes 13.

Il y a lieu également de signaler que les crochets 10 sont normalement maintenus en position basse par des ressorts 23 solidaires, d'une part, des flasques 2 par des attaches 24 et fixés, d'autre part, sur des crochets 10 par des attaches 25.

Il est prévu sur l'armature de l'assise du siège 17 un levier horizontal 28 sensiblement en S dont la partie avant 29 est redressée verticalement.

Ce levier 28 est articulé sur un axe 30 solidaire de l'armature 17 de l'assise et présente, à son extrémité arrière 28a, une fenêtre 31 destinée à coopérer avec un axe 32 solidaire d'une fourchette 33 dont la partie centrale 33a évidée coopère avec un pion 35 solidaire du soubassement 1 du véhicule.

En effet (voir fig. 2), lorsque le coussin avant 4 est en position haute (représentée en traits mixtes à la fig. 2), les leviers 7 sont sensiblement verticaux ainsi que les bielles 22 puisque les crochets 10 sont engagés par leurs découpes 11 sur les axes 13.

Le mouvement en arrière des crochets 10 a provoqué le pivotement du levier 28 dans le sens des aiguilles d'une montre autour de l'axe 30 contre l'action de rappel du ressort 30a. En effet, l'un des crochets 10 bute lors de son déplacement vers l'arrière sur la partie avant 29 du levier 28.

Ce mouvement a entraîné la fourchette 33 vers l'avant et la partie centrale évidée 33a est venue se bloquer sous le pion 35. Il y a lieu de noter que des guides 60 coulissant sur les bielles 22, facilitent le guidage des crochets 10 dont ils sont solidaires.

De ce fait, la partie avant 4 du coussin se trouve parfaitement verrouillée en position haute et un enfant peut donc s'asseoir sur cette partie de siège, comme cela est représenté à la fig. 1 en étant maintenu pendant le trajet du véhicule sur le coussin 4, en prenant appui dorsalement contre le dossier 50 du siège, la tête appuyée sur la têtière 51.

La ceinture de sécurité 52, qui normalement équipe ce siège, est utilisée sans réglage spécial.

Lorsque l'enfant est sorti du véhicule et que l'on veut remettre le coussin avant 4 en place, il suffit de manoeuvrer la manette 13a pour dégager les découpes 11 des crochets 10 qui quittent alors les axes 13.

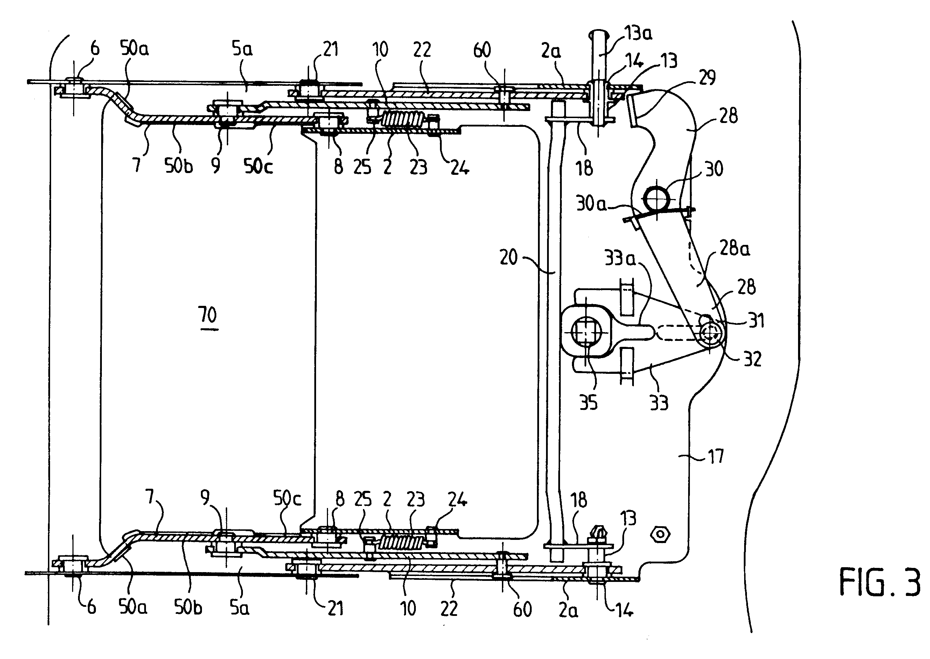

Les ressorts 23 rappellent l'ensemble des pièces 7, 10, 22 dans leur position primitive. Le coussin 4 reprend donc sa place et le levier 28, sous l'action du ressort 30a revenant à sa position première (voir fig. 3), dégage la fourchette 33 du pion 35.

Ainsi, une seule manoeuvre permet au départ, de parfaitement verrouiller le coussin avant 4 en position haute et une seule manoeuvre de la manette 13a permet de ramener ce même coussin dans sa position normale.

## Revendications

1. Dispositif d'une réhausse d'un coussin de siège de véhicule comprenant un verrouillage de sécurité dans lequel il est prévu que l'assise du siège est constituée par deux coussins, un coussin avant (4) mobile verticalement et un coussin arrière fixe restant solidaire du siège, et dans lequel il est prévu, sur les parties latérales de l'armature d'assise, des flasques (2) supportant à la partie avant des axes (8) sur lesquels sont articulés des leviers (7) fixés à leur partie avant sur des axes (6) solidaires d'une armature porte-coussin (5), cette armature porte-coussin présentant à sa partie arrière des axes (21) coopérant avec des bielles (22) articulées sur des axes (13) montés dans des paliers (14) solidaires de l'armature de l'assise du siège (17), caractérisé en ce que des crochets (10), présentant à leur partie arrière des découpes (11), coopèrent par des axes (9) avec des leviers (7) de façon que, lorsque ces crochets sont tirés en arrière vers le dossier du siège, l'armature porte-coussin (5) et le coussin (4), qui lui est solidaire, se trouvent mis en position haute jusqu'au moment où les découpes (11) des crochets (10) s'enclenchent sur les axes (13) d'articulation des bielles (22), mouvement qui provoque par butée d'un des crochets (10), la rotation d'un levier (28) en S autour d'un axe vertical (30), l'extrémité arrière (28a) de ce levier (28) déplaçant une fourchette (33) dont la partie centrale évidée (33a) vient en pénétrant sous un pion (35), se bloquer en verrouillant l'ensemble desdits leviers (7), bielles (22) et crochets (10), le décrochement des crochets (10) s'effectuant par soulèvement de ceux-ci au moyen d'un axe transversal (20) monté sur des bras (18) solidaires des axes (13) d'articulation des bielles (22) et dont l'un est prolongé par une manette (13a).

2. Dispositif d'une réhausse d'un coussin suivant la revendication 1, caractérisé en ce que des ressorts (23), placés entre les flasques (2) et les crochets (10), tendent à ramener ces crochets dans leur position de repos.

3. Dispositif d'une réhausse d'un coussin suivant l'une des revendications 1 ou 2, caractérisé en ce qu'un ressort (30a) enroulé autour de l'axe (30) tend à ramener le levier (28) en S dans la position dans laquelle la fourchette (33) est dégagée du pion de verrouillage (35).

## Claims

1. Device for raising a vehicle seat cushion having a safety interlock in which there is provided that the sitting element of the seat is formed by two cushions, a vertically movable front cushion (4) and a fixed rear cushion rigidly connected to the seat, and wherein flanges (2) are provided on the side parts of the sitting element armature, which flanges support, at the front part, pins (8) on which are articulated levers (7) that are fixed, at their front parts, on pins (6) rigidly connected to a cushion support armature (5), this cushion support armature having its rear part comprising pins (21) cooperating with connecting rods (22) articulated on pins (13) mounted in bearing members (14) rigidly connected to the sitting element armature (17), characterized in that curved plates (10), having their rear part provided with cutouts (11), cooperate via pins (9) with levers (7) so that, when these curved plates are rearwardly pulled toward the seat back, the cushion support armature (5) and the cushion (4), which is rigidly connected thereto, are brought in a raised position up to when the cutouts (11) of the curved plates (10) engage on the pins (13) for articulating the connecting rods (22), which movement causes, by abutment of one of the curved plates (10), the rotation of an S-shaped lever (28) around a vertical pin (30), the rear end (28a) of this lever (28) moving a fork (33), the central recessed portion (33a) of which comes, by penetrating under a stud (35), to be blocked by locking the assembly formed by said levers (7), connecting rods (22) and curved plates (10), the curved plates (10) being made out of engagement by raising the same by means of a transverse pin (20) mounted on arms (18) that are rigidly connected to the pins (13) for articulating the connecting rods (22), one of which being extended by a control handle (13a).

2. Device for raising a cushion according to claim 1, characterized in that springs (23), positioned between the flanges (2), and the curved plates (10) have a tendency to return these curved plates in their rest position.

3. Device for raising a cushion according to one of claims 1 or 2, characterized in that a spring (30a) wound around the pin (30) has a tendency to return the S-shaped lever (28) in the position in which the fork (33) is released from the locking stud (35).

## Patentansprüche

1. Vorrichtung zum Erhöhen eines Fahrzeugsitzkissens, welche eine Sicherheitsverriegelung aufweist, bei der vorgesehen ist, daß die Sitzauflage aus Zwei Sitzkissen besteht, und zwar aus einem vorderen, in vertikaler Richtung beweglichen Sitzkissen (4) und einem hinteren, fest eingebauten und kraftschlüssig mit dem Sitz verbundenen Sitzkissen, wobei auf den Seitenteilen des Sitzgestells Backen (2) vorgesehen sind, die im vorderen Teil Achsen (8) tragen, auf welchen bewegliche Hebel (7) an ihrem vorderen Teil auf Achsen befestigt sind, die an ihrem Vorderteil auf kraftschlüssig an einem Sitzkissen-Trägergestell befestigten Achsen (6) angebracht sind, wobei dieses Sitzkissen-Trägergestell an seiner Rückseite Achsen (21) aufweist, die mit Pleuelstangen (22) zusammenwirken, welche beweglich auf Achsen (13) angeordnet sind, die in kraftschlüssig mit dem Sitzkissen-Trägergestell (17) verbundenen Lagern (14) eingebaut sind,
dadurch gekennzeichnet,
daß Bögen (10) mit Aussparungen (11) an ihrer Rückseite über Achsen (9) mit Hebeln (7) derart zusammenwirken, daß sich, wenn diese Bögen nach hinten - also zur Sitzlehne hin - gezogen werden, das Sitzkissen-Trägergestell (5) und das mit diesem kraftschlüssig verbundene Kissen (4) solange in der oberen Position befinden, bis die Aussparungen (11) der Bögen (10) auf den Gelenkachsen (13) der Pleuelstangen einrasten, wobei diese durch das Anschlagen eines der Bögen (10) hervorgerufene Bewegung die Drehung eines S-förmigen Hebels um eine vertikale Achse (30) bewirkt, wodurch das hintere Ende (28a) dieses Hebels (28) eine Gabel (33) verschiebt, deren ausgekehlter Mittelteil (33a) beim Einrasten in einen Stift (35) blockiert wird und dabei die Kombination aus den genannten Hebeln (7), Pleuelstangen (22) und Bögen (10) verriegelt, wobei die Entriegelung dieser Bögen (10) durch deren Anheben mittels einer Querachse (20) erfolgt, die auf kraftschlüssig mit den Achsen (13) verbundenen Armen (18) montiert ist, und von denen einer eine Verlängerung in Form eines Bedienhebels (13a) aufweist.

2. Vorrichtung zum Erhöhen eines Fahrzeugsitzkissen gemäß Anspruch 1, dadurch gekennzeichnet, daß Federn (23), die zwischen den Backen (2) und den Bögen (10) angeordnet sind, gespannt werden und diese Bögen wieder in ihre Ruhelage bringen.

3. Vorrichtung zum Erhöhen eines Fahrzeugsitzkissens gemäß einem der Ansprüche 1 oder 2, dadurch gekennzeichnet, daß eine um die Achse (39) herum angeordnete Feder (30a) gespannt wird und den S-förmigen Hebel (28) in die Position bringt, in der die Gabel (33) aus dem Verriegelungsstift (35) aushakt.
